(19) Europäisches Patentamt / European Patent Office / Office européen des brevets

(11) **EP 4 527 795 A1**

(12) **EUROPEAN PATENT APPLICATION**
published in accordance with Art. 153(4) EPC

(43) Date of publication:
26.03.2025 Bulletin 2025/13

(21) Application number: 23816075.8

(22) Date of filing: 30.05.2023

(51) International Patent Classification (IPC):
$C01B\ 17/74^{(2006.01)}$  $B01J\ 23/22^{(2006.01)}$
$C01B\ 17/76^{(2006.01)}$  $C01B\ 17/765^{(2006.01)}$
$C01B\ 17/79^{(2006.01)}$  $C01B\ 17/80^{(2006.01)}$

(52) Cooperative Patent Classification (CPC):
B01J 23/22; C01B 17/74; C01B 17/76;
C01B 17/765; C01B 17/79; C01B 17/80

(86) International application number:
PCT/JP2023/020162

(87) International publication number:
WO 2023/234318 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.05.2022 JP 2022088994

(71) Applicants:
• Nihon Kanki Industry Co. Ltd.
Tokyo 105-0011 (JP)
• JFE Steel Corporation
Tokyo 100-0011 (JP)

(72) Inventors:
• NISHIDE Tsutomu
Tokyo 105-0011 (JP)
• OKADA Hideaki
Tokyo 100-0011 (JP)
• ISHIDA Yuichiro
Tokyo 100-0011 (JP)

(74) Representative: Grünecker Patent- und
Rechtsanwälte
PartG mbB
Leopoldstraße 4
80802 München (DE)

(54) **SULFURIC ACID PRODUCTION APPARATUS, AND SULFURIC ACID PRODUCTION METHOD**

(57) The sulfuric acid manufacturing apparatus of the present invention includes a pipeline 41 for supplying a raw material containing at least a sulfur component, a pipeline 45 for introducing a first refrigerant, a combustion furnace 51 for combusting the raw material to generate a combustion gas containing sulfur oxide, a waste heat boiler 52 for cooling the combustion gas by heat exchange with the heated first refrigerant, a converter 61 for oxidizing the sulfur oxide with a catalyst to generate a reaction gas containing sulfur trioxide and water, a cooler 62 that cools the reaction gas by heat exchange with a second refrigerant, a dilute sulfuric acid tower 71 that causes sulfur trioxide and water contained in the reaction gas after the cooling to be absorbed into a sulfuric acid aqueous solution to generate dilute sulfuric acid and discharges an exhaust gas containing sulfur dioxide and oxygen, and heat exchange means 63 for performing heat exchange between the heated second refrigerant and the first refrigerant to prepare the heated first refrigerant and the cooled second refrigerant and supplying any of them to the waste heat boiler 52.

EP 4 527 795 A1

[FIG. 1]

## Description

### Field

The present invention relates to a sulfuric acid manufacturing apparatus and a method for manufacturing sulfuric acid.

### BACKGROUND

Sulfuric acid ($H_2SO_4$) is a strong acid and is manufactured in large quantities and used in various fields. Sulfuric acid is broadly classified into industrial-use concentrated sulfuric acid, which is represented by a sulfuric acid concentration of 90 wt.% or more, and industrial-use dilute sulfuric acid, which is represented by a sulfuric acid concentration of less than 90 wt.%, and these sulfuric acids have different properties. Among the concentrated and dilute sulfuric acids, the dilute sulfuric acid is strongly acidic but does not have an oxidizing action or a dehydrating action unlike the concentrated sulfuric acid, but the dilute sulfuric acid exhibits strong corrosiveness to metal materials and the like. Dilute sulfuric acid is used in various applications such as industrial products, pharmaceuticals, agricultural chemicals, and reagents.

Sulfur-containing raw materials are required for the manufacturing of sulfuric acid. As the raw materials, a desulfurization waste liquid and recycled sulfur from a gas (coke oven gas: hereinafter, "COG") generated in a process of manufacturing coke used for ironmaking and the like, an SOx-containing gas discharged from a copper refining process, and the like are used.

For example, a method of Patent Literature 1 is known as a method capable of inexpensively manufacturing dilute sulfuric acid. In this literature, as a raw material, a material containing a high water component is used in addition to a sulfur component and a nitrogen component, and an oxygen-containing gas having a high oxygen concentration is introduced into combustion means. In the combustion means (combustion furnace), the raw materials are combusted to generate a combustion gas containing sulfur oxide ($SO_x$: here, $1 \leq x < 3$) and water. The combustion gas is cooled by cooling means (waste heat boiler) and introduced into reaction means (converter). In the reaction means (converter), the sulfur oxide is attended with a catalyst to generate sulfur trioxide ($SO_3$), and in dilute sulfuric acid generating means (dilute sulfuric acid tower), the reaction gas is cooled to generate dilute sulfuric acid.

### Citation List

### Patent Literature

Patent Literature 1: Japanese Unexamined Patent Application Publication No. 2021-31305 (Claim 1, Paragraph 0062, or the like)

### Summary of Invention

### TECHNICAL PROBLEM

In Patent Literature 1, the gas is transferred to the combustion furnace, the converter, and the dilute sulfuric acid tower in this order. In order to combust the raw materials at 950°C to 1000°C in the combustion furnace, the combustion gas generated has a high temperature. Since the reaction in the converter is also an exothermic reaction, the temperature of the gas increases. However, a dilute sulfuric acid aqueous solution as a final product is an aqueous solution stored at room temperature, and therefore, cooling means should be provided to cool the gas as needed in the process. In this literature, a waste heat boiler is provided as the cooling means to cool the combustion gas by heat exchange between a refrigerant (water) and the combustion gas.

However, while sulfuric acid is contained in the gas in a state of sulfuric acid gas ($H_2SO_4$), it becomes a sulfuric acid aqueous solution as an aqueous solution when the temperature of the gas drops. The sulfuric acid aqueous solution is strongly acidic and exhibits high corrosiveness to metal. If piping and equipment in the process are made of materials having high corrosion resistance to avoid this, the equipment will be expensive, and the cost of manufacturing dilute sulfuric acid will increase. Conversely, if metals and the like having low corrosion resistance are used for piping and the like, the equipment will be inexpensive, and the manufacturing cost of dilute sulfuric acid will decrease. However, in such a case, in order to avoid corrosion of the piping and the like, it is required to adjust the temperature of the refrigerant when the gas is cooled such that the sulfuric acid gas ($H_2SO_4$) does not become a sulfuric acid aqueous solution. The waste heat boiler of this literature is operated with a high-temperature and high-pressure refrigerant (water) at which the sulfuric acid gas ($H_2SO_4$) does not become a sulfuric acid aqueous solution. Therefore, while inexpensive metal having low corrosion resistance can be used, expensive equipment having a specially designed structure is required to be able to cope with high temperatures and high pressure.

On the other hand, exhaust heat generated during cooling of the gas was not specifically discussed in this literature. In manufacturing dilute sulfuric acid, it is desirable to increase a heat collection rate, effectively utilize the exhaust heat, obtain dilute sulfuric acid with a higher conversion rate, and reduce sulfur dioxide discharged into the atmosphere. In addition, in the waste heat boiler of this literature, low-temperature pure water is fed directly into the boiler to cool the combustion gas, therefore reducing the amount of steam generated from the waste heat boiler and decreasing the amount of steam that can be used effectively.

An object of the present invention is to provide a sulfuric acid manufacturing apparatus and a method for manufacturing sulfuric acid that allow inexpensively manufacturing sulfuric acid, as well as obtaining sulfuric acid with a higher collection rate to reduce sulfur dioxide released into the atmosphere and effectively utilizing exhaust heat.

**SOLUTION TO PROBLEM**

The present inventors have found that predetermined heat exchange is performed a plurality of times using a predetermined refrigerant, thereby allowing inexpensively manufacturing sulfuric acid, as well as obtaining sulfuric acid with a higher collection rate to reduce sulfur dioxide emitted into the atmosphere and effectively utilizing exhaust heat, and completed the present invention.

According to the present invention, there is provided a sulfuric acid manufacturing apparatus including: raw material supply means for supplying a raw material containing at least a sulfur component; combustion means for combusting the raw material to generate a combustion gas containing sulfur oxide; refrigerant introduction means for introducing a first refrigerant; combustion gas cooling means for cooling the combustion gas by heat exchange with a refrigerant; reaction means for oxidizing the sulfur oxide with a catalyst to generate a reaction gas containing sulfur trioxide and water; reaction gas cooling means for cooling the reaction gas by heat exchange with a second refrigerant; sulfuric acid collection means for causing sulfur trioxide and water contained in the reaction gas after the cooling to be absorbed into a sulfuric acid aqueous solution to generate sulfuric acid and discharging an exhaust gas containing sulfur dioxide and oxygen; and heat exchange means for performing heat exchange between a second refrigerant heated by heat exchange with the reaction gas and the first refrigerant to prepare the heated first refrigerant and the cooled second refrigerant, and supplying any of the heated first refrigerant and the cooled second refrigerant to the combustion gas cooling means as the refrigerant.

In the present invention, the combustion gas cooling means for cooling the combustion gas, the reaction gas cooling means for cooling the reaction gas, and the heat exchange means are provided. In the heat exchange means, heat exchange between the second refrigerant heated by heat exchange with the reaction gas and the first refrigerant is performed. Consequently, the heated first refrigerant for the combustion gas cooling means is prepared, allowing exhaust heat to be effectively utilized. In addition, since the first refrigerant is heated to cool the combustion gas, the amount of steam generated by cooling the combustion gas increases, consequently providing an advantage on an increase in the amount of steam that can be used effectively.

In addition, in the present invention, in the combustion gas cooling means, the heated first refrigerant has a temperature equal to or higher than an acid dew point of the combustion gas, and in the reaction gas cooling means, the second refrigerant has a temperature equal to or higher than an acid dew point of the reaction gas.

As described above, in the combustion gas cooling means and the reaction gas cooling means, refrigerants with temperatures equal to or higher than acid dew points of the gases subjected to heat exchange are used. Therefore, the gases are not cooled to temperatures lower than the acid dew points by these means and do not become sulfuric acid aqueous solutions having high corrosiveness. Hence, even relatively inexpensive metallic piping and the like can be used to manufacture sulfuric acid, and sulfuric acid can be inexpensively manufactured.

Moreover, in the present invention, the heat exchange means includes: a refrigerant transfer path for transferring the heated second refrigerant; a preheater that is supplied with the first refrigerant, heats the first refrigerant by heat exchange with the heated second refrigerant, and supplies the heated first refrigerant to the combustion gas cooling means; and a refrigerant return path for returning the second refrigerant after heat exchange with the first refrigerant, from the preheater to the reaction gas cooling means.

By configuring the heat exchange means as described above, it is possible to heat the first refrigerant while circulating the second refrigerant, and the second refrigerant can be used efficiently for both cooling a reactive gas and heating the first refrigerant.

The refrigerant return path may also supply a part of the second refrigerant to the combustion gas cooling means.

By configuring as described above, a part of the second refrigerant can also be used as a refrigerant for cooling the combustion gas.

The refrigerant return path includes a tank that stores the second refrigerant and a pump that supplies the second refrigerant to the reaction gas cooling means.

Preferably, the second refrigerant is an organic refrigerant that is liquid at least in a range of -20°C to 350°C.

When a substance that is solid at ordinary temperature, such as molten salt, is used as a refrigerant, it solidifies at ordinary temperature, impairing its function as a refrigerant. Since the organic refrigerant that is liquid at least in the range of -20°C to 350°C does not solidify in the heat exchange means, heat exchange with the reaction gas can stably continue.

Preferably, the first refrigerant is water, and the second refrigerant is a mixture of diphenyl and diphenyl oxide.

The heat exchange means is preferably a smoke pipe system. In addition, the combustion gas cooling means is preferably a water pipe system applied to a combustion gas containing dust. However, if the combustion gas does not contain dust, a smoke pipe system can be applied to the combustion gas cooling means by using the refrigerant return path to supply a part of the second refrigerant to the combustion gas cooling means to use the part of the second refrigerant as a refrigerant for cooling the combustion gas.

The cost of manufacturing sulfuric acid can be reduced by using an inexpensive smoke pipe system as the heat exchange means. On the other hand, for the combustion gas cooling means, since the combustion gas transferred from the combustion means may contain adherent dust, blockage trouble may occur if dust adheres to the inside of downstream means. In the case of a water-pipe boiler, dust adheres to an outer surface of the pipe through which water flows, and therefore, pipe blockage does not occur. In addition, dust adhering to the outer surface of the pipe can be easily removed by, for example, soot blow.

Moreover, the sulfuric acid manufacturing apparatus of the present invention preferably further includes means for negative pressure operation.

By performing a negative pressure operation, oxygen in the atmosphere is drawn to the reaction means without providing special equipment. Since the oxygen drawn in this way promotes a catalytic reaction in the reaction means, the integrated conversion rate is a high value exceeding 98.9%. Furthermore, by performing a negative pressure operation, a harmful gas with a high temperature flowing into the atmosphere can be avoided.

In this case, hot air introduction means for introducing hot air into the reaction means; and a purge flow passage configured to purge a reaction gas remaining in the reaction means upstream of the sulfuric acid collection means is preferably further included.

By introducing hot air into the reaction means, the reaction means can be preheated before the equipment is activated. By preheating the reaction means to a reaction temperature in advance, an operation start-up period can be shortened to be equal to or less than half. The introduction of hot air is also effectively used to purge the reaction means during maintenance. Due to performing a negative pressure operation, hot air is drawn and introduced into the reaction means, and it is unlikely that a deflected flow of hot air inside the reaction means occurs. In the reaction means, local generation of sulfuric acid solution and catalyst molten solidified product are avoided.

Further, when hot air is introduced into the reaction means in an apparatus where a pressurized operation is performed instead of the negative pressure operation, it is difficult to purge equally over the whole region in the reaction means because the hot air flows in a deflected manner. The region where the hot air does not reach locally occurs in the reaction means, which generates the sulfuric acid solution and catalyst molten solidified product locally. In order to operate the apparatus normally, a complicated work, in which they are discharged out of the system, screened, and sorted, and only the normal catalyst is refilled, is required.

Hence, by performing a negative pressure operation and introducing hot air into the reaction means, the equipment can be activated again after hot air purging without any work such as screening and sorting of the catalyst.

Preferably, sulfur dioxide collection means for collecting sulfur dioxide contained in the exhaust gas is further included.

As described above, since the sulfur dioxide contained in the exhaust gas is collected, sulfur dioxide can be detoxified without being released into the environment.

In this case, the sulfur dioxide collection means preferably causes sulfur dioxide contained in the exhaust gas to be absorbed into water to generate sulfurous acid and oxidizes the sulfurous acid with oxygen contained in the exhaust gas to generate sulfuric acid.

As described above, the sulfur dioxide in the exhaust gas can be absorbed into water to generate sulfurous acid and then can be oxidized and collected as sulfuric acid. Since the exhaust gas contains about 10% oxygen, this oxygen can be used for the oxidization into sulfuric acid, eliminating the need to separately add an oxidizing agent as in the related art. The collection rate of sulfuric acid can be increased, and also, sulfur dioxide released into the atmosphere can be reduced.

According to the present invention, there is provided a method for manufacturing sulfuric acid including: a raw material supply step of supplying a raw material containing at least a sulfur component; a combustion step of combusting the raw material to generate a combustion gas containing sulfur oxide; a refrigerant introduction step of introducing a first refrigerant; a combustion gas cooling step of cooling the combustion gas by heat exchange with a refrigerant; a reaction step of oxidizing the sulfur oxide with a catalyst to generate a reaction gas containing sulfur trioxide and water; a reaction gas cooling step of cooling the reaction gas by heat exchange with a second refrigerant; a sulfuric acid collection step of causing absorbing sulfur trioxide and water contained in the reaction gas after the cooling to be absorbed into a sulfuric acid aqueous solution to generate sulfuric acid and discharging an exhaust gas containing sulfur dioxide and oxygen; and the heat exchange step of performing heat exchange between a second refrigerant heated by heat exchange with the reaction

**EP 4 527 795 A1**

gas and the first refrigerant to prepare the heated first refrigerant and the cooled second refrigerant, and supplying any of the heated first refrigerant and the cooled second refrigerant to the combustion gas step as the refrigerant.

In the present invention, the cooling step of cooling the combustion gas and the heat exchange step of cooling the reaction gas are provided. In the heat exchange step, heat exchange between the second refrigerant heated by heat exchange with the reaction gas and the first refrigerant is performed. Consequently, the heated first refrigerant for the cooling step can be prepared, allowing exhaust heat to be effectively utilized. In addition, since the first refrigerant is heated to cool the combustion gas, the amount of steam generated by cooling the combustion gas increases, consequently providing an advantage on an increase in the amount of steam that can be used effectively.

In addition, preferably, in the combustion gas cooling step, the heated first refrigerant has a temperature equal to or higher than an acid dew point of the combustion gas, and in the reaction gas cooling step, the second refrigerant has a temperature equal to or higher than an acid dew point of the reaction gas.

As described above, in the cooling steps and the heat exchange step, refrigerants with temperatures equal to or higher than the acid dew points of the gases subjected to heat exchange are used. Therefore, the gases are not cooled to temperatures lower than the acid dew points by these steps and do not become sulfuric acid aqueous solutions having high corrosiveness. Hence, even relatively inexpensive metallic piping and the like can be used to manufacture sulfuric acid, and sulfuric acid can be inexpensively manufactured.

The heat exchange step includes: a step of cooling the reaction gas by heat exchange with the second refrigerant; a transferring step of transferring the heated second refrigerant; a remaining heat step of heating the first refrigerant by heat exchange with the heated second refrigerant with the preheater and supplying the heated first refrigerant to the combustion gas cooling step; and a refrigerant returning step of returning the second refrigerant after heat exchange with the first refrigerant and using the second refrigerant for heat exchange with the reaction gas.

By providing the heat exchange step as described above, it is possible to heat the first refrigerant while circulating the second refrigerant, and the second refrigerant can be used efficiently for both cooling a reactive gas and heating the first refrigerant.

The refrigerant returning step may also supply a part of the second refrigerant to the combustion gas cooling means.

By configuring as described above, a part of the second refrigerant can also be used as a refrigerant for cooling the combustion gas.

The refrigerant returning step includes a step of storing the second refrigerant and a step of supplying the second refrigerant to the reaction gas cooling step.

Preferably, as the second refrigerant, an organic refrigerant that is liquid at least in a range of -20°C to 350°C is used.

When a substance that is solid at ordinary temperature, such as molten salt, is used as a refrigerant, it solidifies at ordinary temperature, impairing its function as a refrigerant. Since the organic refrigerant that is liquid at least in the range of -20°C to 350°C does not solidify in the heat exchange means, heat exchange with the reaction gas can stably continue.

Preferably, water is used as the first refrigerant, and a mixture of diphenyl and diphenyl oxide is used as the second refrigerant.

The heat exchange means is preferably a smoke pipe system. In addition, the combustion gas cooling means is preferably a water pipe system applied to a combustion gas containing dust. However, if the combustion gas does not contain dust, a smoke pipe system can be applied to the combustion gas cooling means by using the refrigerant transfer and refrigerant return means to supply a part of the second refrigerant to the combustion gas cooling means to use the part of the second refrigerant as a refrigerant for cooling the combustion gas.

Since the combustion gas transferred from the combustion step may contain adherent dust, blockage trouble may occur if dust adheres to the inside of downstream steps. In the case of a water-pipe boiler, dust adheres to an outer surface of the pipe through which water flows, and therefore, the dust can be easily removed by soot blow.

In the present invention, while a negative pressure operation is preferably performed, a pressurized operation is performed in some cases.

By performing a negative pressure operation, oxygen in the atmosphere is drawn to the reaction step without providing special equipment. Since the oxygen drawn in this way promotes a catalytic reaction in the reaction step, the integrated conversion rate is a high value exceeding 99%. Furthermore, by performing a negative pressure operation, a harmful gas with a high temperature flowing into the atmosphere can be avoided.

Preferably, sulfur dioxide collection step of collecting sulfur dioxide contained in the exhaust gas is further included.

As described above, since the sulfur dioxide contained in the exhaust gas is collected, sulfur dioxide can be detoxified without being released into the environment.

In this case, the sulfur dioxide collection step preferably causes sulfur dioxide contained in the exhaust gas to be absorbed into water to generate sulfurous acid, and the sulfurous acid is oxidized with oxygen contained in the exhaust gas to generate sulfuric acid.

As described above, the sulfur dioxide in the exhaust gas can be absorbed into water to generate sulfurous acid and then can be oxidized and collected as sulfuric acid. Since the exhaust gas contains about 10% oxygen, this oxygen can be used for the oxidization into sulfuric acid, eliminating the need to separately add an oxidizing agent as in the related art. The collection rate of sulfuric acid can be increased, and also, sulfur dioxide released into the atmosphere can be reduced.

According to the present invention, there is provided a maintenance method including purging a reaction gas remaining in the reaction means upstream of the sulfuric acid collection means by introducing hot air into the reaction means from the hot air introduction means while performing a negative pressure operation, and introducing an obtained purge gas into the sulfur dioxide collection means.

When hot air is introduced into the reaction means in an apparatus where a pressurized operation is performed, it is difficult to purge equally over the whole region in the reaction means because the hot air flows in a deflected manner. The region where the hot air does not reach locally occurs in the reaction means, which generates the sulfuric acid solution and catalyst molten solidified product locally. In order to operate the apparatus normally, a complicated work, in which they are discharged out of the system, screened, and sorted, and only the normal catalyst is refilled, is required.

During maintenance, by introducing hot air into the reaction means while performing a negative pressure operation, and purging the reaction gas remaining in the reaction means, the generation of acid dew point by cooling a purge gas by retained heat can be avoided.

\<Invention of Basic Application\>

[1] A sulfuric acid manufacturing apparatus including:

raw material supply means for supplying a raw material containing at least a sulfur component;
combustion means for combusting the raw material to generate a combustion gas containing sulfur oxide;
cooling means for cooling the combustion gas by heat exchange with a heated first refrigerant;
reaction means for oxidizing the sulfur oxide with a catalyst to generate a reaction gas containing sulfur trioxide and water;
heat exchange means for cooling the reaction gas by heat exchange with a second refrigerant; and
sulfuric acid collection means for absorbing sulfur trioxide and water contained in the reaction gas after the cooling in a sulfuric acid aqueous solution to generate sulfuric acid and discharging an exhaust gas containing sulfur dioxide and oxygen,
in which the heat exchange means performs heat exchange between a second refrigerant heated by heat exchange with the reaction gas and a first refrigerant to prepare the heated first refrigerant for the cooling means.

[2] The sulfuric acid manufacturing apparatus according to [1], in which in the cooling means, the heated first refrigerant has a temperature equal to or higher than an acid dew point of the combustion gas, and in the heat exchange means, the second refrigerant has a temperature equal to or higher than an acid dew point of the reaction gas.

[3] The sulfuric acid manufacturing apparatus according to [1], in which the heat exchange means includes:

a cooler that cools the reaction gas by heat exchange with the second refrigerant;
a refrigerant transfer path for transferring the second refrigerant heated by heat exchange;
a preheater that is supplied with a first refrigerant, heats the first refrigerant by heat exchange with the heated second refrigerant, and supplies the heated first refrigerant to the cooling means; and
a refrigerant return path for returning the second refrigerant after heat exchange with the first refrigerant from the preheater to the cooler.

[4] The sulfuric acid manufacturing apparatus according to [2], in which the refrigerant return path includes a tank that stores the second refrigerant and a pump that drives the second refrigerant to the cooler.

[5] The sulfuric acid manufacturing apparatus according to [1], in which the second refrigerant is an organic refrigerant that is liquid at least in a range of -20°C to 350°C.

[6] The sulfuric acid manufacturing apparatus according to [1], in which the first refrigerant is water, and the second refrigerant is a mixture of diphenyl and diphenyl oxide.

[7] The sulfuric acid manufacturing apparatus according to [1], in which the heat exchange means is a smoke pipe system.

[8] The sulfuric acid manufacturing apparatus according to [1], further including means for negative pressure operation.

[9] The sulfuric acid manufacturing apparatus according to [8], further including: hot air introduction means for introducing hot air into the reaction means; and a purge flow passage configured to purge a reaction gas remaining in the reaction means upstream of the sulfuric acid collection means.

[10] The sulfuric acid manufacturing apparatus according to [1] further including sulfur dioxide collection means for collecting sulfur dioxide contained in the exhaust gas.

[11] The sulfuric acid manufacturing apparatus according to [10], in which the sulfur dioxide collection means causes sulfur dioxide contained in the exhaust gas to be absorbed into water to generate sulfurous acid and oxidizes the sulfurous acid with oxygen contained in the exhaust gas to generate sulfuric acid.

[12] A method for manufacturing sulfuric acid including:

raw material supply means for supplying a raw material containing at least a sulfur component;
combustion means for combusting the raw material to generate a combustion gas containing sulfur oxide;
cooling means for cooling the combustion gas by heat exchange with a heated first refrigerant;
reaction means for oxidizing the sulfur oxide with a catalyst to generate a reaction gas containing sulfur trioxide and water;
heat exchange means for cooling the reaction gas by heat exchange with a second refrigerant; and
sulfuric acid collection means for absorbing sulfur trioxide and water contained in the reaction gas after the cooling in a sulfuric acid aqueous solution to generate sulfuric acid and discharging an exhaust gas containing sulfur dioxide and oxygen,
in which the heat exchange means performs heat exchange between a second refrigerant heated by heat exchange with the reaction gas and a first refrigerant to prepare the heated first refrigerant for the cooling step.

[13] The method for manufacturing sulfuric acid according to [12], in which in the cooling step, the heated first refrigerant has a temperature equal to or higher than an acid dew point of the combustion gas, and in the heat exchange step, the second refrigerant has a temperature equal to or higher than an acid dew point of the reaction gas.

[14] The method for manufacturing sulfuric acid according to [12], in which the heat exchange step includes:

a step of cooling the reaction gas by heat exchange with the second refrigerant;
a step of transferring the second refrigerant heated by heat exchange;
a step of heating the first refrigerant by heat exchange with the heated second refrigerant and supplying the heated first refrigerant to the cooling step; and
a step of returning the second refrigerant after heat exchange with the first refrigerant and using the second refrigerant for heat exchange with the reaction gas.

[15] The method for manufacturing sulfuric acid according to [14], in which the refrigerant return path includes a step of storing the second refrigerant and a step of driving the second refrigerant to the cooler.

[16] The method for manufacturing sulfuric acid according to [12], in which, as the second refrigerant, an organic refrigerant that is liquid at least in a range of -20°C to 350°C is used.

[17] The method for manufacturing sulfuric acid according to [12], in which water is used as the first refrigerant, and a mixture of diphenyl and diphenyl oxide is used as the second refrigerant.

[18] The method for manufacturing sulfuric acid according to [12], in which the heat exchange step is performed by a smoke pipe system.

[19] The method for manufacturing sulfuric acid according to [12], in which a negative pressure operation is performed.

[20] The method for manufacturing sulfuric acid according to [12] further including a sulfur dioxide collection step of collecting sulfur dioxide contained in the exhaust gas.

[21] The method for manufacturing sulfuric acid according to [20], in which the sulfur dioxide collection step causes sulfur dioxide contained in the exhaust gas to be absorbed into water to generate sulfurous acid, and the sulfurous acid is oxidized with oxygen contained in the exhaust gas to generate sulfuric acid.

[22] A maintenance method for the sulfuric acid manufacturing apparatus according to [10], comprising
purging a reaction gas remaining in the reaction means upstream of the sulfuric acid collection means by introducing hot air into the reaction means from the hot air introduction means while performing a negative pressure operation, and introducing an obtained purge gas into the sulfur dioxide collection means.

## ADVANTAGEOUS EFFECTS OF INVENTION

The present invention can provide a sulfuric acid manufacturing apparatus and a method for manufacturing sulfuric acid that allow inexpensively manufacturing sulfuric acid, as well as obtaining sulfuric acid with a higher collection rate to reduce sulfur dioxide released into the atmosphere and effectively utilizing exhaust heat.

## BRIEF DESCRIPTION OF THE DRAWINGS

FIG. 1 is a schematic diagram illustrating upstream steps of a dilute sulfuric acid manufacturing apparatus, which is a kind of a sulfuric acid manufacturing apparatus of the present invention.

FIG. 2 is a schematic diagram illustrating downstream steps of the dilute sulfuric acid manufacturing apparatus, which is a kind of the sulfuric acid manufacturing apparatus of the present invention.

FIG. 3 is a schematic diagram illustrating an internal structure of combustion means (combustion furnace).

FIG. 4 is a schematic diagram illustrating hot air introduction means.

FIG. 5 is a schematic diagram illustrating an internal structure of a converter.

FIG. 6 is a cross-sectional view of a water-pipe boiler.

FIG. 7 is a graph chart showing the relationship between the concentration of $SO_3$ in a gas, water vapor concentration, and sulfuric acid dew point estimated value.

FIG. 8 is a calculation chart of $SO_2 \rightarrow SO_3$ equilibrium conversion rate.

FIG. 9 is a schematic diagram illustrating upstream steps of a dilute sulfuric acid manufacturing apparatus according to a second embodiment.

FIG. 10 is a schematic diagram illustrating downstream steps of the dilute sulfuric acid manufacturing apparatus according to the second embodiment.

## DETAILED DESCRIPTION

Hereinafter, configurations of embodiments of the present invention will be described. The present invention can be appropriately modified and implemented without changing the gist thereof. While manufacturing of dilute sulfuric acid, which is a kind of sulfuric acid of the present invention, is described in the embodiments below, the present invention is not limited to this and can be applied, for example, to manufacturing of concentrated sulfuric acid.

1. Dilute Sulfuric Acid Manufacturing Apparatus and Method for Manufacturing Dilute Sulfuric Acid (First Embodiment)

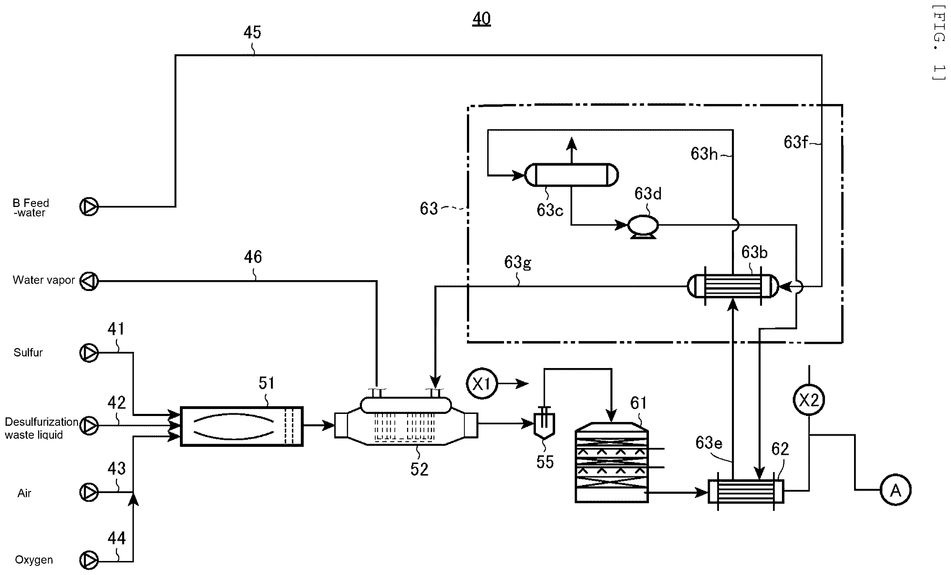

Hereinafter, a dilute sulfuric acid manufacturing apparatus and a method for manufacturing dilute sulfuric acid according to one embodiment (first embodiment) of the present invention will be described with reference to the drawings. FIG. 1 is a schematic diagram illustrating upstream steps of a dilute sulfuric acid manufacturing apparatus 40 and illustrates the embodiment in which an oxygen-containing gas is supplied to raw materials (here, desulfurization waste liquid/molten sulfur) . Further, a sulfur concentration can be adjusted by adding molten sulfur to a raw material of hydrogen sulfide, and consequently, for example, by increasing the sulfuric acid concentration, the present invention can be used for manufacturing concentrated sulfuric acid.

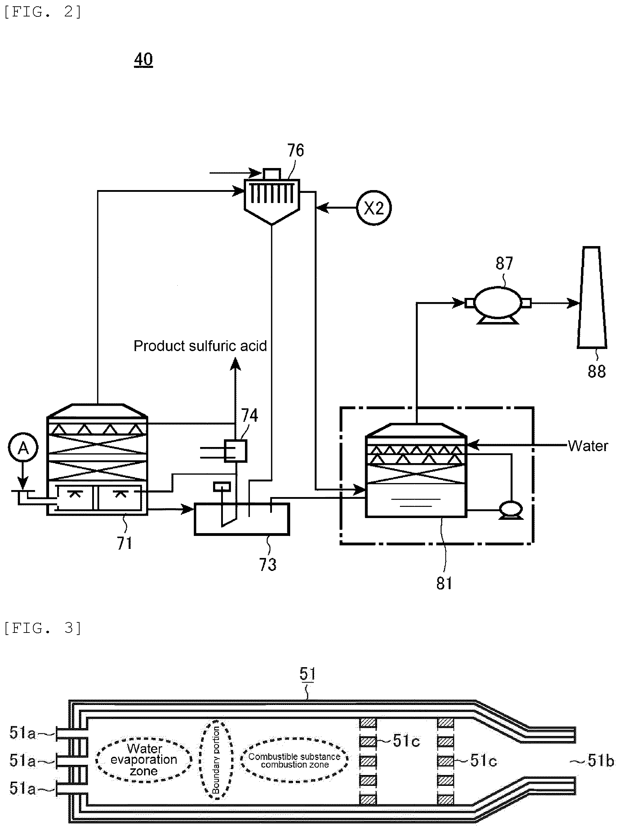

FIG. 2 is a schematic diagram illustrating downstream steps of the dilute sulfuric acid manufacturing apparatus 40. Further, the "sulfuric acid" of the present invention means sulfuric acid with a sulfuric acid concentration that is not limited and specifically includes, for example, dilute sulfuric acid and concentrated sulfuric acid. Here, the "dilute sulfuric acid" means a sulfuric acid aqueous solution having a sulfuric acid concentration of less than 90 wt.% and includes "thin sulfuric acid" (sulfuric acid content of 60 wt.% to 80 wt.%) and "purified dilute sulfuric acid" (sulfuric acid content of 27 wt.% to 50 wt.%) as defined in JIS K1321.

As illustrated in FIG. 1, the dilute sulfuric acid manufacturing apparatus 40 of this embodiment includes means for supplying a raw material. Raw materials of this embodiment contain at least a sulfur component and include molten sulfur and a desulfurization waste liquid in this embodiment. However, the raw materials are not limited to these. In addition, the raw materials may further include purified COG and the like as a combustion improver. Raw material supply means is means for supplying these raw materials to a combustion furnace 51. The dilute sulfuric acid manufacturing apparatus 40 of this embodiment includes a pipeline 41 for supplying molten sulfur as a raw material. The molten sulfur is sulfur that is collected from a refinery or the like and is brought into a molten state. The raw material is supplied into the combustion furnace 51 through a pump (not illustrated) disposed in the middle of the pipeline 41.

In addition, the dilute sulfuric acid manufacturing apparatus 40 also includes a pipeline 42 for supplying a desulfurization waste liquid as a raw material. The desulfurization waste liquid is a waste liquid from desulfurization equipment installed for the purpose of removing soot and dust, an organic substance, a sulfur compound, and the like in an exhaust gas (crude COG) discharged from coke oven equipment and the like. In general, the desulfurization waste liquid contains components such as free sulfur, free $NH_3$, $NH_4SCN$, $(NH_4)_2S_2O_3$, and $H_2O$. Of the components, water ($H_2O$) is not particularly defined and often accounts for 50 wt.% or more of the entire desulfurization waste liquid. The pipeline 42 communicates with the combustion furnace 51, and the desulfurization waste liquid is also supplied into the combustion furnace 51 as a raw material.

The pipeline 41 and the pipeline 42 correspond to raw material supply means of the present invention, and these means realize a raw material supply step. Consequently, of the raw materials (molten sulfur and desulfurization waste liquid) supplied to the combustion furnace 51, the desulfurization waste liquid contains a sulfur component (10 wt.% to 40 wt.%) such as $(NH_4)_2S_2O_3$, a nitrogen component (5 wt. % to 25 wt. %) such as $NH_3$, and a water component (40 wt.% to 80 wt.%), in addition to a simple sulfur substance. As in this embodiment, when there are a plurality of kinds of raw materials (for example, in this embodiment, two kinds of molten sulfur and desulfurization waste liquid), the water content is defined as an amount obtained by mixing the water in the respective raw materials and the water in the combustion improver.

In addition, the dilute sulfuric acid manufacturing apparatus 40 includes a pipeline 43 for supplying air. A pipeline 44 for supplying an oxygen gas is connected to the pipeline 43. For example, an oxygen gas generator (for example, a pressure vacuum swing adsorption (PVSA) method: not illustrated) can be provided to supply oxygen having a high concentration from the oxygen gas generator. The oxygen gas generator is a device that efficiently obtains high-purity oxygen by adsorbing and removing nitrogen in air under pressure using an adsorbent such as zeolite. The oxygen gas generator can generate oxygen having a purity of 90 vol.% or more. This oxygen is mixed with the air in the pipeline 43 and supplied into the combustion furnace 51 as air having a high oxygen concentration. For the oxygen gas generator, a pressure swing adsorption (PSA) method may be used. In addition, alternatively, oxygen may be supplied by forming a branch from an existing oxygen gas pipe.

The above-described oxygen gas generator, the pipeline 43, and the pipeline 44 can be referred to as oxygen-containing gas generating means. The oxygen-containing gas supplied to the combustion furnace 51 by them is adjusted to have an oxygen concentration of 21 vol.% to 40 vol.%, preferably 21 vol.% to 30 vol.%, and more preferably 25 vol.% to 30 vol.%.

The combustion furnace 51 (combustion means) performs a combustion step of combusting the raw materials with the oxygen-containing gas to generate a combustion gas containing sulfur oxide (SOx). FIG. 3 is a schematic diagram illustrating an internal structure of the combustion furnace 51. As illustrated, supply ports 51a through which the raw materials and the oxygen-containing gas are supplied are provided upstream of the combustion furnace 51, the raw materials are combusted inside, and the combustion gas is discharged from a downstream discharge port 51b. In this embodiment, the molten sulfur is supplied through the upper supply port 51a in the drawing, the desulfurization waste liquid is supplied through the middle supply port 51a, and air is supplied through the lower supply port 51a. Further, in addition to an aspect in which the raw material is supplied through a separate supply port for each kind of raw material as in this embodiment, the raw materials may be supplied to the combustion furnace 51 in a state where some or all of the raw materials are mixed in advance.

There is a water evaporation zone on a raw material supply side of the combustion furnace 51, and here, the combustion of the molten sulfur and the purified COG and the water evaporation in the desulfurization waste liquid are mainly performed. A combustible substance combustion zone lies downstream of the water evaporation zone, where a combustible substance in the desulfurization waste liquid is combusted. A boundary portion is formed between the zones. A lattice brick 51c is provided between the combustible substance combustion zone and the discharge port 51b. The lattice brick 51c is formed by arranging cubic heat-resistant bricks in a lattice shape and in a partially open state. An opening ratio of the lattice brick 51c is preferably about 50%. The lattice brick 51c is often provided in a plurality of stages.

In the combustion furnace 51, it is more preferable that the oxygen concentration of the oxygen-containing gas to be introduced be in a range of 21 vol.% to 40 vol.%, and preferably 21 vol.% to 30 vol.%, the oxygen concentration in the combustion gas generated in the combustion furnace 51 be in a range of 2.0 vol.% to 7.0 vol.%, and an $SO_3$ conversion rate in the combustion gas generated in the combustion furnace 51 be in a range of 1.0% to 3.0%. The $SO_3$ conversion rate is represented by the following expression.

$$SO_3 \text{ conversion rate} = (SO_3/SO_x) \times 100$$

(Here, $SO_3$ represents a volume concentration of $SO_3$ contained in the combustion gas, and $SO_x$ represents a volume concentration of SOx contained in the combustion gas.)

The lattice brick 51c provided downstream of the combustible substance combustion region enables the following functions to be fulfilled in addition to a reduction of radiation to the devices positioned downstream. The lattice brick 51c has a function of physically promoting re-mixing of the air and a combustible substance such that the combustible substance does not cause a blow-by phenomenon in an uncombusted state even if the air and the combustible substance come into an incomplete mixed state in the combustible substance combustion zone, and the lattice brick 51c has a function of promoting re-combustion by retained heat of the bricks. For this purpose, it is preferable to install the lattice bricks 51c in a plurality of stages. In addition, respective stage openings of the plurality of stages of the lattice bricks 51c are formed in a mutually staggered arrangement. Consequently, since dust in the gas adheres to and grows on a brick surface and falls down, it is preferable that the plurality of stages of lattice bricks 51c be arranged to accumulate the falling dust without providing an opening at the lowermost portion.

A combustion temperature at which the raw materials are combusted in the combustion furnace 51 is preferably in a range of 900°C to 1,100°C. The upper limit of the combustion temperature is preferably 1,050°C or lower. In order to reduce the amount of NOx in the combustion gas, the combustion temperature is preferably low and is, for example, 1,025°C or lower, more preferably 1,000°C or lower.

In the combustion furnace 51, since the raw materials are combusted with the oxygen-containing gas having an oxygen concentration of 21 vol.% to 40 vol.%, the amount of NOx contained in the combustion gas to be generated can be reduced as compared with a case where the raw materials are combusted under the same conditions using normal air (oxygen concentration of less than 21 vol.%). For example, the amount of NOx contained in the combustion gas when the raw materials are combusted with the oxygen-containing gas having an oxygen concentration of 21 vol.% to 40 vol.% is denoted by $NOx_{(rich)}$, and the amount of NOx contained in the combustion gas when the same raw materials are combusted under the same conditions using air having an oxygen concentration of less than 21 vol.% is denoted by $NOX_{(air)}$. In this case, an NOx decreasing rate represented by the following expression can be 50% to 95%.

$$\text{NOx decreasing rate: } NOx_{(rich)}/NOx_{(air)} \times 100 \ (\%)$$

The NOx decreasing rate tends to decrease as the oxygen concentration increases, and the NOx decreasing rate can be about 80% at an oxygen concentration of 25 vol.% and about 60% at an oxygen concentration of 30 vol.%.

As illustrated in FIG. 1, the combustion gas generated in the combustion furnace 51 is transferred to a waste heat boiler 52 (WHB) (combustion gas cooling means). In addition, water is supplied from a pipeline 45 (refrigerant introduction means), and this water passes through a feed-water preheater 63b described later and is introduced into the waste heat boiler 52. In the waste heat boiler 52, a combustion gas cooling step is performed, in which water heated as a refrigerant (water in this embodiment) is supplied into the boiler, this water is evaporated with the combustion gas to generate steam, and the combustion gas is cooled by heat exchange with the water. Further, in this embodiment, a "first refrigerant" of the present invention corresponds to water introduced from the pipeline 45 into the waste heat boiler 52, that is, "boiler feed-water," and a "heated first refrigerant" corresponds to "boiler water." The combustion gas is cooled to a temperature that does not fall below an acid dew point (220°C), and the boiler pressure in this case is about 3 MPa. In the waste heat boiler 52, the combustion gas is cooled to a temperature of 420°C to 360°C, preferably about 375°C. Further, in Patent Literature 1, the combustion gas is cooled to a temperature of 380°C to 460°C, preferably about 420°C, whereas in this embodiment, the combustion gas is cooled to a lower temperature.

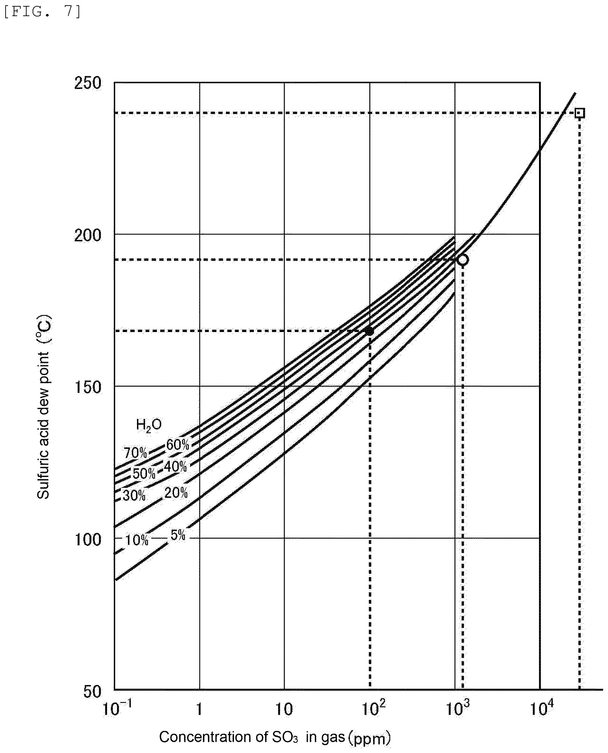

Here, the acid dew point is described with reference to FIG. 7. FIG. 7 illustrates the relationship between the acid dew point of sulfuric acid (vertical axis) and the concentration of $SO_3$ contained in the combustion gas (horizontal axis) using a graph for each amount of water contained in the combustion gas (water vapor concentration). The acid dew point is determined by the concentration of $SO_3$ in the combustion gas, the water vapor concentration, the pressure, and the like. When the temperature falls below the acid dew point, a solution containing condensed sulfuric acid causes severe corrosion (acid dew point corrosion) inside the equipment. In order to avoid acid dew point corrosion, it is necessary to maintain the combustion gas at a temperature equal to or higher than the acid dew point. The graph in FIG. 7 illustrates that the acid dew point increases as the concentration of $SO_3$ in the combustion gas increases at the same water vapor concentration and that the acid dew point increases as the water vapor concentration increases at the same $SO_3$ concentration.

Here, as illustrated in a simulation described later, the combustion gas generated in the combustion furnace 51 and introduced into the waste heat boiler 52 contains 0.2 vol.% to 0.3 vol.% (that is, 2000 ppm to 3000 ppm) $SO_3$ and about 25 vol.% $H_2O$. The composition of this combustion gas is indicated by a white circle in FIG. 7, and the sulfuric acid dew point is about 190°C. That is, the acid dew point of the combustion gas in the waste heat boiler 52 is 190°C, and in the waste heat boiler 52, it is necessary to maintain the combustion gas at a temperature equal to or higher than the above-described acid dew point, preferably higher than 190°C.

The waste heat boiler 52 includes a boiler, and the combustion gas is cooled in the boiler. The waste heat boiler 52 includes refrigerant supply means (refrigerant supply step) for supplying a predetermined refrigerant (boiler feed-water in this embodiment) into the above-described boiler, combustion gas cooling means (combustion gas cooling step) for evaporating the refrigerant from the refrigerant supply means with the combustion gas to generate steam and cooling the combustion gas by heat exchange, and discharging means of water vapor (water vapor discharging step). Here, in the waste heat boiler 52, the temperature of the combustion gas needs to be equal to or higher than the acid dew point, for example, higher than 190°C as described above. Accordingly, the temperature of the boiler water as a refrigerant also needs to be higher than 190°C. The refrigerant used here and the refrigerant supply means (refrigerant supply step) will be described in detail later.

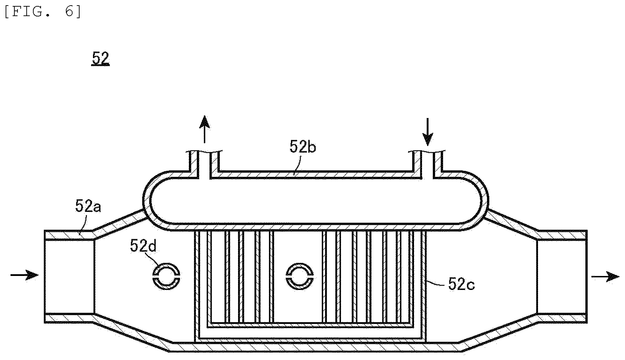

Examples of the combustion gas cooling means include a smoke pipe system, a water pipe system, and the like, but considering the removal of the dust adhering in the boiler, a water pipe system is preferably used. A water-pipe boiler is described with reference to FIG. 6. As illustrated, the waste heat boiler 52 includes a boiler main body 52a that defines the outline of the boiler, a boiler drum 52b disposed at an upper portion of the boiler main body 52a, a boiler tube 52c disposed inside the boiler main body 52a, and a soot blower 52d disposed inside the boiler main body 52a.

The combustion gas generated in the combustion furnace 51 is introduced into the boiler main body 52a through an opening on one end side (left side in the drawing) of openings disposed at both ends of the boiler main body 52a and is led out from the opening on the other end side (right side in the drawing) . The boiler drum 52b stores the boiler water and water vapor as refrigerants. An inlet for introducing a refrigerant (opening indicated by the downward arrow) and an outlet for leading the refrigerant out (opening indicated by the upward arrow) are disposed on an upper surface of the boiler drum 52b. From the refrigerant inlet, the boiler feed-water from the feed-water preheater 63b described later is introduced into the boiler drum 52b, and the evaporated water vapor in the boiler drum 52b is discharged to the outside from the refrigerant outlet.

The boiler tube 52c is constituted of a pipe that is hollow inside and constituted of longitudinal tubes arranged in a longitudinal direction with respect to the boiler main body 52a and a lateral tube arranged in a lateral direction with respect to the boiler main body 52a. The longitudinal tubes are arranged at a lower portion of the boiler drum 52b and communicate with the boiler drum 52b. The lateral tube allows lower portions of the longitudinal tubes to communicate with one another. With this configuration, the boiler water in the boiler drum 52b circulates in the boiler tube 52c and returns into the boiler drum 52b again. The combustion gas passing through the outside of a boiler tube 52a comes into contact with the boiler tube 52c and is cooled by heat exchange.

The soot blower 52d is a tubular member disposed in the boiler main body 52a, which allows air to be blown into the tube. In the soot blower 52d, a plurality of openings communicating with the inside are provided, and the air introduced inside the tube is blown out through the openings. In addition, the soot blower 52d is allowed to rotate. The combustion gas contains adherent dust, and the dust adheres to an external surface of the boiler tube 52c. However, the air blown out from the soot blower 52d can blow off the dust to clean the external surface of the boiler tube 52c. In addition, the soot blower 52d itself rotates to allow cleaning a wide range of the external surface of the boiler tube 52c.

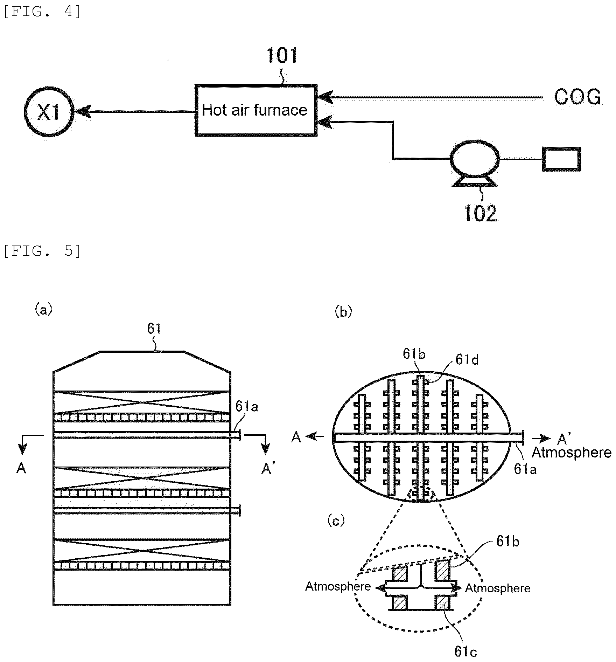

The combustion gas cooled in the waste heat boiler 52 passes through a dust precipitator 55 and is introduced into a converter 61 (reaction means). The dust precipitator 55 is means for removing dust contained in the combustion gas. In the middle of a pipeline from the dust precipitator 55 to the converter 61, it is preferable that hot air introduction means X1 be provided. As illustrated in FIG. 4, the hot air introduction means X1 includes a hot air furnace 101 and a hot air furnace fan 102, and COG is introduced into the hot air furnace 101. The hot air furnace 101 is means for combusting COG to generate high-temperature heating gas. In addition, the hot air furnace fan 102 includes a blower fan and is means for sending out the heating gas generated by the hot air furnace 101 as hot air. By introducing hot air at 300°C to 400°C into the converter 61 from the hot air introduction means X1, the preheating or maintenance purging of the converter 61 can be performed.

The combustion gas cooled in the waste heat boiler 52 contains a trace amount of nitrogen component (for example, undecomposed $NH_3$ or $NO_x$ such as $NO$ or $NO_2$). The converter 61 performs a reaction for generating a reaction gas containing sulfur trioxide ($SO_3$) by reacting sulfur dioxide ($SO_2$) in the combustion gas with oxygen to oxidize the sulfur dioxide ($SO_2$) using catalysts installed in a plurality of stages (three stages in the drawing) (reaction step). More specifically, the converter 61 converts sulfur dioxide into sulfur trioxide ($SO_3$) with high efficiency by a technique of directly mixing the atmosphere drawn from the outside with the converted gas which is heated by oxidation (exothermic reaction) of sulfur oxide ($SO_x$) and oxygen by the catalyst in an early stage of the plurality of stages, and lowering the temperature to a temperature suitable for the catalytic reaction in the later stage.

FIG. 5 is a schematic diagram illustrating an internal structure of the converter 61, in which FIG. 5(a) is a side view, FIG. 5(b) is a cross-sectional view taken along line A-A' of FIG. 5(a), and FIG. 5(c) is an enlarged view of a part surrounded by a broken line circle of FIG. 5(b). As illustrated in this figure, the converter 61 includes main air pipes 61a that take in air of the atmosphere, branch air pipes 61b that branch in the converter from the main air pipes 61a, and air ports 61d that feed air into the converter from the branch air pipes 61b.

As the catalyst, a known catalyst used for manufacturing sulfuric acid can be used, and examples thereof can include vanadium pentoxide ($V_2O_5$). Vanadium pentoxide has a denitration function and causes $NH_3$ to react with $NO_x$ to decompose into nitrogen ($N_2$) and water ($H_2O$). Therefore, this catalyst can simultaneously generate sulfur trioxide and decompose nitrogen components ($NH_3$ and $NO_x$). At this time, $NH_3$ may be injected for denitration.

The temperature of the combustion gas introduced into the converter 61 is about 370°C. In the first stage of the converter 61, about 55% of the sulfur dioxide ($SO_2$) contained in the combustion gas introduced into the converter 61 is subjected to an oxidation reaction to be converted into $SO_3$, and the gas temperature after the reaction is close to 500°C. The remaining sulfur dioxide ($SO_2$) is subjected to an oxidation reaction to sulfur trioxide ($SO_3$) in the second stage and the third stage of the converter 61. An inlet temperature of the second stage is about 410°C, and the gas temperature after the reaction is about 480°C. About 95% of the $SO_2$ contained in the combustion gas introduced into the converter 61 is

converted into $SO_3$ due to the inclusion of air. An inlet temperature of the third stage is about 390°C. About 98.9% of the $SO_2$ contained in the combustion gas introduced into the converter 61 is converted into $SO_3$ due to the inclusion of air. The gas temperature after the reaction in the third stage is about 410°C at the maximum. As described above, even if the temperature of the combustion gas introduced into the converter 61 is as low as about 370°C, by introducing air into the converter 61, 98.9% of the $SO_2$ contained in the combustion gas can be converted into $SO_3$, making it possible to generate $SO_3$ with a high conversion rate.

Further, a denitration catalyst may be disposed upstream of the first stage of the converter 61 (inflow side of the combustion gas from the waste heat boiler 52). As the denitration catalyst, a catalyst obtained by mixing vanadium pentoxide with a co-catalyst can be used.

The reaction gas generated by the converter 61 is transferred to a cooler 62 (reaction gas cooling means) and cooled. Here, as illustrated in the simulation described later, the reaction gas generated by the converter 61 and transferred to the cooler 62 contains 5 vol.% to 6 vol.% (that is, $5 \times 10^4$ ppm to $6 \times 10^4$ ppm) $SO_3$ and about 15 vol.% $H_2O$. The composition of this reaction gas is indicated by a white square in FIG. 7, and the sulfuric acid dew point is about 240°C. That is, the acid dew point of the reaction gas introduced into the cooler 62 is about 240°C, and in the cooler 62, it is necessary to maintain the reaction gas at a temperature equal to or higher than the above-described acid dew point, preferably 250°C or higher.

The cooler 62 cools the reaction gas by heat exchange with the second refrigerant. As the cooler 62, a smoke pipe system is preferably used. A smoke-pipe heat exchanger is a heat exchanger in a system that allows the reaction gas to flow inside a thin pipe and the refrigerant to circulate outside the pipe. Compared with a water-pipe boiler such as the waste heat boiler 52, the smoke-pipe heat exchanger is preferably used as the cooler 62 because it is inexpensive and has high cooling efficiency. However, other forms, such as a water pipe system, may be used as the cooler 62.

As the second refrigerant, an organic refrigerant that is liquid in a temperature range of -20°C to 350°C is used. Examples of the organic refrigerant can include Dowtherm (registered trademark) A, which is a mixture of diphenyl and diphenyl oxide (diphenyl ether), NeoSK-OIL 1400, NeoSK-OIL 1300, NeoSK-OIL 330, NeoSK-OIL 360, NeoSK-OIL L400, KSK-OIL 260, and the like. Among these, "NeoSK-OIL 1400", which is widely used in general and has excellent heat resistance, is preferred as the organic refrigerant suitable for liquid phase use this time.

While the reaction gas is as high as about 410°C at an outlet temperature of the converter 61, the reaction gas is cooled by the cooler 62 until the temperature becomes about 270°C to 320°C, which is a temperature exceeding the acid dew point of around 250°C. In this case, the cooler 62 has a refrigerant pressure of about 0.1 MPa. A purging pipeline X2 (purge flow passage) is preferably provided in a path for transferring the reaction gas cooled by the cooler 62 downstream.

Heat exchange means 63 includes the feed-water preheater 63b, a heat medium tank 63c, a heat medium circulation pump 63d, a refrigerant transfer path 63e, and a refrigerant return path 63h. Through a refrigerant transfer pipe 63e, the second refrigerant heated to a temperature of about 320°C by heat exchange with the reaction gas is transferred from the cooler 62 to the feed-water preheater 63b.

A multitubular heat exchanger can be used as the feed-water preheater 63b. In the feed-water preheater 63b, the first refrigerant (boiler feed-water) at about 105°C is introduced from the outside through a refrigerant introduction path 63f. In the feed-water preheater 63b, heat exchange between the second refrigerant heated to a temperature of about 320°C by the cooler 62 and the first refrigerant is performed. Consequently, the first refrigerant is about 220°C, and the second refrigerant is about 270°C. The first refrigerant heated to a temperature of about 220°C by heat exchange is supplied to the waste heat boiler 52 through a refrigerant supply path 63g. Consequently, the amount of the first refrigerant (water vapor) collected in the waste heat boiler 52 can be increased. Further, the refrigerant introduction path 63f, the feed-water preheater 63b, and the refrigerant supply path 63g correspond to the refrigerant supply means for the combustion gas cooling means (waste heat boiler 52).

The refrigerant return path 63h returns the second refrigerant after heat exchange with the first refrigerant (boiler feed-water) from the feed-water preheater 63b to the cooler 62. The refrigerant return path 63h includes the heat medium tank 63c that stores the second refrigerant and can release a mixed trace inert gas into the atmosphere and the heat medium circulation pump 63d that drives the second refrigerant to the cooler 62.

As described above, in the cooler 62, the reaction gas is cooled by heat exchange between the reaction gas and the second refrigerant (heat exchange step). Moreover, by heating the first refrigerant by heat exchange between the heated second refrigerant and the first refrigerant (boiler feed-water), the heated first refrigerant for the combustion gas cooling means (waste heat boiler 52) can be obtained.

As illustrated in FIG. 2, the reaction gas cooled by the cooler 62 is transferred to a tower bottom portion of a dilute sulfuric acid tower 71 (sulfuric acid collection means) in which a dilute sulfuric acid collection step is performed. The dilute sulfuric acid tower 71 is a device that causes $H_2O$ and $SO_3$ in the reaction gas to be absorbed into a circulating sulfuric acid aqueous solution (dilute sulfuric acid) to generate dilute sulfuric acid of a product and is also referred to as an absorption tower. The inside of the dilute sulfuric acid tower 71 is filled with packing materials, and a sulfuric acid aqueous solution is sprayed toward the packing materials from an upper portion of the tower. The reaction gas comes into contact with the sulfuric acid aqueous solution when passing between the packing materials, thereby absorbing $H_2O$ and $SO_3$ in the

sulfuric acid aqueous solution. The sulfuric acid aqueous solution having absorbed $SO_3$ is transferred to a dilute sulfuric acid tank 73 and cooled with cooling water from a cooling water tower (not illustrated) by a heat exchanger 74.

A gas containing sulfuric acid mist, unreacted $SO_2$, and the like is discharged from a tower top portion of the dilute sulfuric acid tower 71. The sulfuric acid mist in the exhaust gas is collected by a wet electrostatic precipitator 76 or a mist eliminator, transferred to the tank 73, and reused as the sulfuric acid aqueous solution, and the rest of the exhaust gas is transferred to a sulfurous acid tower 81 (sulfur dioxide collection means) where sulfurous acid is generated.

The exhaust gas transferred to the sulfurous acid tower 81 contains about 200 ppm (dry content) $SO_2$ and about 10% (dry content) $O_2$, and the remainder is $CO_2$ and $N_2$. In the sulfurous acid tower 81, water (industrial water) is used as an $SO_2$ absorbent to generate sulfurous acid ($H_2SO_3$) (sulfur dioxide collection step). This sulfurous acid is oxidized to sulfuric acid by the oxygen contained in the exhaust gas. Further, the purge gas of the converter 61 required for the maintenance of the dilute sulfuric acid tower 71 and the wet electrostatic precipitator 76 is led out from the purging pipeline X2 provided downstream of the cooler 62 and is introduced into a pipeline for directly transferring the purge gas to the sulfurous acid tower 81. Since the maintenance purge gas from the converter 61 decreases in temperature over time and causes acid dew point corrosion, the purge gas is heated by the cooler 62 using the heat the second refrigerant has, thereby obtaining the effect of avoiding acid dew point corrosion by the purge gas. In addition, by introducing the purge gas for maintenance into the sulfurous acid tower 81, the effect of removing $SO_2$ gas contained in the purge gas can be obtained.

The exhaust gas from a top portion of the sulfurous acid tower 81 is sucked/pressurized by a drawing fan 87 and discharged into the atmosphere through a chimney 88. Since $SO_2$ is absorbed and collected as sulfuric acid in the sulfurous acid tower 81, the amount of $SO_2$ discharged into the atmosphere can be significantly reduced to have a concentration of around an exhaust gas control value of 50 ppm or less. The drawing fan 87 has a function of setting all the individual devices of the dilute sulfuric acid manufacturing apparatus 40, which are disposed upstream of the drawing fan 87, to a negative pressure. Since the negative pressure operation by the drawing fan 87 draws gases, a harmful gas having a high temperature flowing out into the atmosphere is avoided. In addition, the converter 61 also has a function of drawing air in the atmosphere without providing special equipment. As described above, dilute sulfuric acid manufacturing and exhaust gas treatment are performed.

The dilute sulfuric acid manufacturing apparatus and the method for manufacturing dilute sulfuric acid of this embodiment includes the combustion gas cooling means for cooling the combustion gas, the reaction gas cooling means for cooling the reaction gas, and the heat exchange means. In the heat exchange means, heat exchange between the second refrigerant heated by heat exchange with the reaction gas and the first refrigerant is performed. Consequently, it has become possible to prepare the heated first refrigerant for the combustion gas cooling means and effectively utilize the exhaust heat.

During normal operation, the cooler cools the reaction gas by heat exchange and exerts a cooling heat collection effect for preheating the waste heat boiler. Moreover, during maintenance purging, the prevention of cooling of the purge gas by retained heat contributes to the prevention of corrosion on the downstream side.

2. Simulation

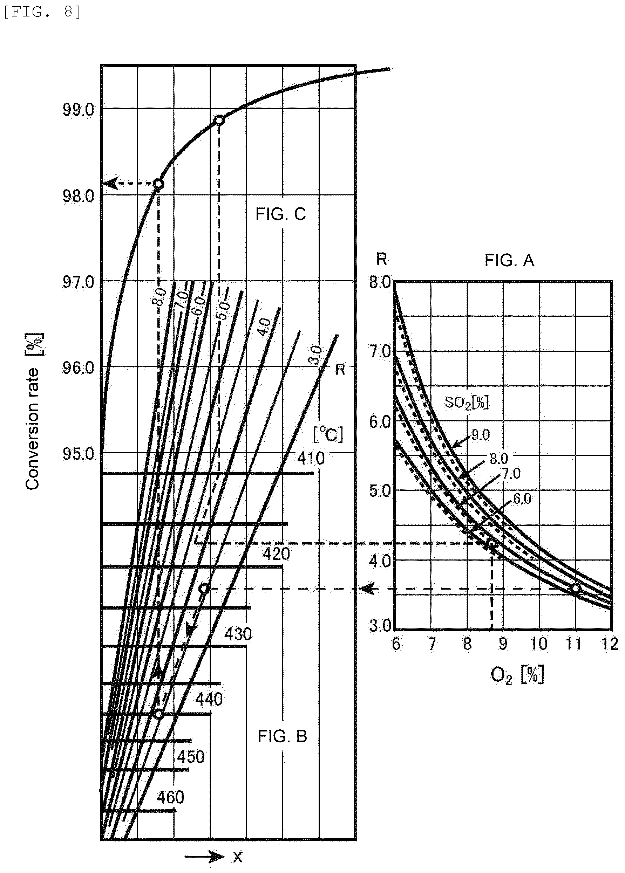

For the dilute sulfuric acid manufacturing apparatus 40 in FIG. 1 and FIG. 2, a calculation simulation was performed based on a calculation chart of $SO_2 \rightarrow SO_3$ equilibrium conversion rate in FIG. 8 and analogous performance operational data.

As a result of the calculation simulation of the gas composition of the combustion gas between the combustion furnace 51 and the dust precipitator 55, numerical values shown in the table below were obtained.

[Table 1]

| Component | Amount discharged (Nm³/Hr) | Content rate (%) |
|---|---|---|
| $SO_2$ | 682 | 8.71 |
| $SO_3$ | 20 | 0.26 |
| $O_2$ | 325 | 4.15 |
| $H_2O$ | 1947 | 24.86 |
| $CO_2$ | 4856 | 62.02 |
| $N_2$ | | |
| TOTAL | 7830 | 100 |

As shown in the table above, the $SO_3$ concentration of the combustion gas is 0.26 vol.%, and the $H_2O$

concentration is 24.86 vol. %. In this respect, it can be seen that the acid dew point of the combustion gas is around 190°C based on the graph in FIG. 7.

As a result of the calculation simulation of the temperature and conversion rate in each stage of the converter 61, numerical values shown in the table below were obtained.

[Table 2]

| First stage catalyst | Temperature | 370°C→500°C |
|---|---|---|
| | Conversion rate | 55% |
| Second stage catalyst | Temperature | 410°C→480°C |
| | Cumulative conversion rate | 95% |
| Third stage catalyst | Temperature | 390°C→410°C |
| | Cumulative conversion rate | 98.9% |

The amount of air drawn and added to a second stage catalyst and a third stage catalyst is 4900 $Nm^3$/hr.

As shown in the above table, even if the temperature of the combustion gas introduced into a first stage catalyst is as low as 370°C, the combustion gas can be converted up to the third stage catalyst with a high conversion rate, having a cumulative conversion rate of 98.9%, from the calculation simulation by the calculation chart of $SO_2 \rightarrow SO_3$ equilibrium conversion rate in FIG. 8.

As a result of the calculation simulation of the gas composition of the reaction gas between the converter 61 and the cooler 62, numerical values shown in the table below were obtained.

[Table 3]

| Component | Amount discharged ($Nm^3$/Hr) | Content rate (%) |
|---|---|---|
| $SO_2$ | 7.7 | 0.06 |
| $SO_3$ | 694.3 | 5.4 |
| $O_2$ | 1119 | 8.7 |
| $H_2O$ | 1950 | 15.1 |
| $CO_2$ | 9129 | Balance |
| $N_2$ | | |
| TOTAL | 12900 | 100 |

As shown in the table above, the $SO_3$ concentration of the reaction gas is 5.4 vol.%, and the $H_2O$ concentration is 15.1 vol. %. In this respect, it can be seen that the acid dew point of the reaction gas is around 240°C based on the graph in FIG. 7.

In the analogous performance operational data, the concentration value of $SO_2$ gas in the exhaust gas at an outlet of the wet electrostatic precipitator 76 decreases to about 200 ppm. The conversion rate of 99.7% or more is obtained by synergizing the conversion rate of gas phase reaction ($SO_3 + H_2O \rightarrow H_2SO_4$) with the conversion rate of 98.9% obtained from the calculation chart of $SO_2 \rightarrow SO_3$ equilibrium conversion rate. As a result of the calculation simulation, numerical values shown in the table below were obtained.

[Table 4]

| Component | Amount discharged ($Nm^3$/Hr) |
|---|---|
| $SO_2$ | 2 |
| $O_2$ | 1116 |
| $CO_2$ | 9129 |
| $N_2$ | |
| TOTAL | 10247 |

The following advantage of effective utilization of exhaust heat collection can be obtained by the calculation simulation of first stage catalyst reaction using the low temperature of 370°C for this time and the conventional high temperature of 410°C.

The inlet temperature of the first stage catalyst shown in Table 2 was 410°C, and the outlet temperature of the third stage catalyst was 420°C.

The total amount of exhaust gas shown in Table 3 was 13,700 $Nm^3$/Hr.

- Amount of heat collected in the waste heat boiler 52 in the case of temperature 370°C: a
- Amount of heat collected in the cooler 62 in the case of low temperature 370°C: b
- Difference in collected heat amount in the waste heat boiler 52: c
- Difference in collected heat amount loss in the cooler 62: d

Difference in heat collection between low-temperature case and high-temperature case = {1 - (a + b - c - d) / (a + b) }×100 ≈ 13 ... Expression (1)

From the above, in the case of a low temperature of 370°C, an advantage of 13% better heat collection can be obtained than in the case of a high temperature of 410°C.

3. Second Embodiment

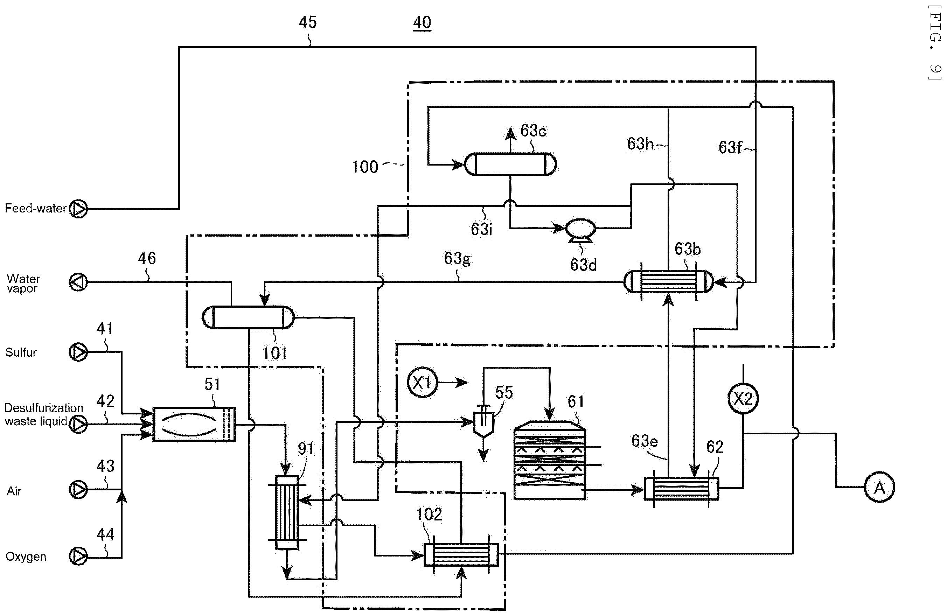

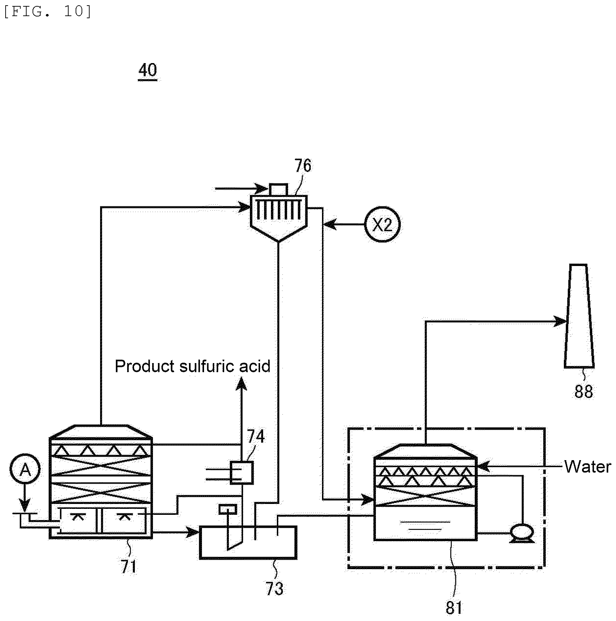

Next, a dilute sulfuric acid manufacturing apparatus and a method for manufacturing dilute sulfuric acid according to another embodiment (second embodiment) of the present invention will be described. FIG. 9 is a schematic diagram illustrating upstream steps of the dilute sulfuric acid manufacturing apparatus of this embodiment, and FIG. 10 is a schematic diagram illustrating downstream steps of the dilute sulfuric acid manufacturing apparatus of this embodiment. The same reference numerals are designated to the same devices as those of the first embodiment, and explanations of the devices are omitted below.

In this embodiment, first, instead of the water-pipe waste heat boiler 52, a perpendicular smoke-pipe waste heat boiler 91 is employed. That is, it is a boiler where a portion from a supply port to an outlet of the combustion gas is arranged perpendicular to the ground (that is, in a direction parallel to the direction of gravitational force). This forms a structure in which dust that does not block the waste heat boiler 91 falls downward and is easily discharged from the waste heat boiler 91. In this embodiment, the gas is transferred to the downstream side by pressure from the upstream side by pushing in the air introduced from the pipeline 43 without providing the drawing fan 87.

In addition, in this embodiment, heat exchange means 100 has a different structure from the first embodiment. In this embodiment, in a discharge flow of the heat medium circulation pump 63d that drives the second refrigerant to the cooler 62, a pipeline 63i is provided, which branches from the pipeline for introducing the second refrigerant into the cooler 62 to introduce this second refrigerant into the waste heat boiler 91. Then, in the waste heat boiler 91, the second refrigerant is used to cool the combustion gas. As described above, the second refrigerant that cools a cooler 63 is used to cool the waste heat boiler 91. The second refrigerant introduced into the waste heat boiler 91 cools the combustion gas and then is introduced into a heat medium cooler (steam generator) 102. The second refrigerant cooled by the heat medium cooler (steam generator) 102 is returned to a refrigerant tank 63c.

The water that has cooled the second refrigerant in the refrigerant transfer path 63e becomes high-temperature steam, which is introduced into a steam drum 101. The steam of the steam drum is introduced into a heat medium drum 102 and is used to cool the second refrigerant. This steam is then returned to the steam drum 101 again, and part of the steam is purged outside through a pipeline 46.

**DESCRIPTION OF REFERENCE SIGNS**

40 Dilute sulfuric acid manufacturing apparatus
41 Pipeline (raw material supply means)
42 Pipeline (raw material supply means)
43 Pipeline
44 Pipeline
45 Pipeline (refrigerant introduction means)
46 Pipeline
51 Combustion furnace (combustion means)

51a    Supply port
51b    Discharge port
51c    Lattice brick
52     Waste heat boiler (combustion gas cooling means)
52a    Boiler main body
52b    Boiler drum
52c    Boiler tube
52d    Soot blower
55     Dust precipitator
61     Converter (reaction means)
62     Cooler (reaction gas cooling means)
63     Heat exchange means
63b    Feed-water preheater
63c    Heat medium tank
63d    Heat medium circulation pump
63e    Refrigerant transfer path
63f    Refrigerant introduction path
63g    Refrigerant supply path
63h    Refrigerant return path
63i    Pipeline
71     Dilute sulfuric acid tower (sulfuric acid collection means)
73     Tank
74     Heat exchanger
76     Wet electrostatic precipitator
81     Sulfurous acid tower (sulfur dioxide collection means)
87     Drawing fan
88     Chimney
91     Waste heat boiler (combustion gas cooling means)
100    Heat exchange means
101    Steam drum
102    Heat medium cooler (steam generator)

**Claims**

1. A sulfuric acid manufacturing apparatus comprising:

   raw material supply means for supplying a raw material containing at least a sulfur component;
   combustion means for combusting the raw material to generate a combustion gas containing sulfur oxide;
   refrigerant introduction means for introducing a first refrigerant;
   combustion gas cooling means for cooling the combustion gas by heat exchange with a refrigerant;
   reaction means for oxidizing the sulfur oxide with a catalyst to generate a reaction gas containing sulfur trioxide and water;
   reaction gas cooling means for cooling the reaction gas by heat exchange with a second refrigerant;
   sulfuric acid collection means for causing sulfur trioxide and water contained in the reaction gas after the cooling to be absorbed into a sulfuric acid aqueous solution to generate sulfuric acid and discharging an exhaust gas containing sulfur dioxide and oxygen; and
   heat exchange means for performing heat exchange between a second refrigerant heated by heat exchange with the reaction gas and the first refrigerant to prepare the heated first refrigerant and the cooled second refrigerant, and supplying any of the heated first refrigerant and the cooled second refrigerant to the combustion gas cooling means as the refrigerant.

2. The sulfuric acid manufacturing apparatus according to claim 1, wherein
   in the combustion gas cooling means, the heated first refrigerant has a temperature equal to or higher than an acid dew point of the combustion gas, and in the reaction gas cooling means, the second refrigerant has a temperature equal to or higher than an acid dew point of the reaction gas.

3. The sulfuric acid manufacturing apparatus according to claim 1, wherein
   the heat exchange means includes:

a refrigerant transfer path for transferring the heated second refrigerant;

a preheater that is supplied with the first refrigerant, heats the first refrigerant by heat exchange with the heated second refrigerant, and supplies the heated first refrigerant to the combustion gas cooling means; and

a refrigerant return path for returning the second refrigerant after heat exchange with the first refrigerant, from the preheater to the reaction gas cooling means.

4. The sulfuric acid manufacturing apparatus according to claim 3, wherein
the refrigerant return path supplies a part of the second refrigerant to the combustion gas cooling means.

5. The sulfuric acid manufacturing apparatus according to claim 3, wherein
the refrigerant return path includes a tank that stores the second refrigerant and a pump that supplies the second refrigerant to the reaction gas cooling means.

6. The sulfuric acid manufacturing apparatus according to claim 1, wherein
the second refrigerant is an organic refrigerant that is liquid at least in a range of -20°C to 350°C.

7. The sulfuric acid manufacturing apparatus according to claim 1, wherein
the first refrigerant is water, and the second refrigerant is a mixture of diphenyl and diphenyl oxide.

8. The sulfuric acid manufacturing apparatus according to claim 1, wherein
the heat exchange means is a smoke pipe system.

9. The sulfuric acid manufacturing apparatus according to claim 1, further comprising means for negative pressure operation.

10. The sulfuric acid manufacturing apparatus according to claim 9, further comprising:

hot air introduction means for introducing hot air into the reaction means; and

a purge flow passage configured to purge a reaction gas remaining in the reaction means upstream of the sulfuric acid collection means.

11. The sulfuric acid manufacturing apparatus according to claim 1, further comprising sulfur dioxide collection means for collecting sulfur dioxide contained in the exhaust gas.

12. The sulfuric acid manufacturing apparatus according to claim 11, wherein
the sulfur dioxide collection means causes sulfur dioxide contained in the exhaust gas to be absorbed into water to generate sulfurous acid and oxidizes the sulfurous acid with oxygen contained in the exhaust gas to generate sulfuric acid.

13. A method for manufacturing sulfuric acid, comprising:

a raw material supply step of supplying a raw material containing at least a sulfur component;

a combustion step of combusting the raw material to generate a combustion gas containing sulfur oxide;

a refrigerant introduction step of introducing a first refrigerant;

a combustion gas cooling step of cooling the combustion gas by heat exchange with a refrigerant;

a reaction step of oxidizing the sulfur oxide with a catalyst to generate a reaction gas containing sulfur trioxide and water;

a reaction gas cooling step of cooling the reaction gas by heat exchange with a second refrigerant;

a sulfuric acid collection step of causing absorbing sulfur trioxide and water contained in the reaction gas after the cooling to be absorbed into a sulfuric acid aqueous solution to generate sulfuric acid and discharging an exhaust gas containing sulfur dioxide and oxygen; and

the heat exchange step of performing heat exchange between a second refrigerant heated by heat exchange with the reaction gas and the first refrigerant to prepare the heated first refrigerant and the cooled second refrigerant, and supplying any of the heated first refrigerant and the cooled second refrigerant to the combustion gas step as the refrigerant.

14. The method for manufacturing sulfuric acid according to claim 13, wherein
in the combustion gas cooling step, the heated first refrigerant has a temperature equal to or higher than an acid dew point of the combustion gas, and in the reaction gas cooling step, the second refrigerant has a temperature equal to or higher than an acid dew point of the reaction gas.

15. The method for manufacturing sulfuric acid according to claim 13, wherein the heat exchange step includes:

> a refrigerant transferring step of transferring the heated second refrigerant;
> a remaining heat step of heating the first refrigerant by heat exchange with the heated second refrigerant and supplying the heated first refrigerant to the combustion gas cooling step; and
> a refrigerant returning step of returning the second refrigerant after heat exchange with the first refrigerant and using the second refrigerant for heat exchange with the reaction gas.

16. The method for manufacturing sulfuric acid according to claim 15, wherein the refrigerant returning step supplies a part of the second refrigerant to the combustion gas cooling step.

17. The method for manufacturing sulfuric acid according to claim 15, wherein the refrigerant return path includes a step of storing the second refrigerant and a step of supplying the second refrigerant to the reaction gas cooling step.

18. The method for manufacturing sulfuric acid according to claim 13, wherein as the second refrigerant, an organic refrigerant that is liquid at least in a range of -20°C to 350°C is used.

19. The method for manufacturing sulfuric acid according to claim 13, wherein water is used as the first refrigerant, and a mixture of diphenyl and diphenyl oxide is used as the second refrigerant.

20. The method for manufacturing sulfuric acid according to claim 13, wherein the heat exchange step is performed by a smoke pipe system.

21. The method for manufacturing sulfuric acid according to claim 13, wherein a negative pressure operation is performed.

22. The method for manufacturing sulfuric acid according to claim 13, further comprising a sulfur dioxide collection step of collecting sulfur dioxide contained in the exhaust gas.

23. The method for manufacturing sulfuric acid according to claim 22, wherein the sulfur dioxide collection step causes sulfur dioxide contained in the exhaust gas to be absorbed into water to generate sulfurous acid, and the sulfurous acid is oxidized with oxygen contained in the exhaust gas to generate sulfuric acid.

24. A maintenance method for the sulfuric acid manufacturing apparatus according to claim 11, comprising purging a reaction gas remaining in the reaction means upstream of the sulfuric acid collection means by introducing hot air into the reaction means from the hot air introduction means while performing a negative pressure operation, and introducing an obtained purge gas into the sulfur dioxide collection means.

[FIG. 1]

[FIG. 2]

40

Product sulfuric acid

[FIG. 3]

51

Water evaporation zone

Boundary portion

Combustible substance combustion zone

51a

51b

51c

[FIG. 4]

[FIG. 5]

[FIG. 6]

<u>52</u>

[FIG. 7]

[FIG. 8]

FIG. C

FIG. A

FIG. B

[FIG. 9]

[FIG. 10]

40

## INTERNATIONAL SEARCH REPORT

| International application No. |
| --- |
| **PCT/JP2023/020162** |

**A.     CLASSIFICATION OF SUBJECT MATTER**

*C01B 17/74*(2006.01)i; *B01J 23/22*(2006.01)i; *C01B 17/76*(2006.01)i; *C01B 17/765*(2006.01)i; *C01B 17/79*(2006.01)i; *C01B 17/80*(2006.01)i

FI:    C01B17/74 G; C01B17/80 Z; C01B17/765 Z; C01B17/76 A; C01B17/79; B01J23/22 M

According to International Patent Classification (IPC) or to both national classification and IPC

**B.     FIELDS SEARCHED**

Minimum documentation searched (classification system followed by classification symbols)

C01B17/74-17/80; B01J23/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| A | JP 2021-31305 A (NIHON KANKI KOGYO CO., LTD.) 01 March 2021 (2021-03-01) <br> entire text | 1-24 |
| A | JP 2019-507097 A (THYSSENKRUPP INDUSTRIAL SOLUTIONS AG) 14 March 2019 (2019-03-14) <br> entire text | 1-24 |
| A | JP 2016-517389 A (MECS, INC.) 16 June 2016 (2016-06-16) <br> entire text | 1-24 |
| A | JP 2003-517419 A (PHARMACIA CORPORATION GLOBAL PATENT DEPT.) 27 May 2003 (2003-05-27) <br> entire text | 1-24 |
| A | JP 61-117105 A (MONSANTO CO.) 04 June 1986 (1986-06-04) <br> entire text | 1-24 |
| A | JP 2006-503782 A (OUTOKUMPU OYJ) 02 February 2006 (2006-02-02) <br> entire text | 1-24 |

☑ Further documents are listed in the continuation of Box C.          ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 August 2023** | **15 August 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

International application No.

**PCT/JP2023/020162**

### C.     DOCUMENTS CONSIDERED TO BE RELEVANT

| Category* | Citation of document, with indication, where appropriate, of the relevant passages | Relevant to claim No. |
|---|---|---|
| A | JP 2018-27870 A (SUMITOMO METAL MINING CO., LTD.) 22 February 2018 (2018-02-22)<br>entire text | 1-24 |
| A | JP 5-139708 A (HALDOR TOPSOEE AS) 08 June 1993 (1993-06-08)<br>entire text | 1-24 |

Form PCT/ISA/210 (second sheet) (January 2015)

<div align="center">

**INTERNATIONAL SEARCH REPORT**
**Information on patent family members**

</div>

| | International application No. |
|---|---|
| | **PCT/JP2023/020162** |

| Patent document cited in search report | | | Publication date (day/month/year) | Patent family member(s) | | | Publication date (day/month/year) |
|---|---|---|---|---|---|---|---|
| JP | 2021-31305 | A | 01 March 2021 | (Family: none) | | | |
| JP | 2019-507097 | A | 14 March 2019 | US | 2020-0290876 | A1 | |
| | | | | entire text | | | |
| | | | | EP | 003423401 | A1 | |
| | | | | entire text | | | |
| | | | | CN | 108698825 | A | |
| | | | | KR | 10-2018-0117672 | A | |
| JP | 2016-517389 | A | 16 June 2016 | US | 2014-0322125 | A1 | |
| | | | | entire text | | | |
| | | | | EP | 002969936 | A1 | |
| | | | | entire text | | | |
| | | | | CN | 105209381 | A | |
| | | | | KR | 10-2015-0131158 | A | |
| JP | 2003-517419 | A | 27 May 2003 | EP | 001230150 | A1 | |
| | | | | entire text | | | |
| | | | | CN | 001384805 | A | |
| | | | | KR | 10-2002-0049001 | A | |
| JP | 61-117105 | A | 04 June 1986 | US | 004670242 | A1 | |
| | | | | entire text | | | |
| | | | | EP | 000499290 | A1 | |
| | | | | entire text | | | |
| JP | 2006-503782 | A | 02 February 2006 | US | 2006-0245997 | A1 | |
| | | | | entire text | | | |
| | | | | CN | 001708453 | A | |
| | | | | KR | 10-2005-0073578 | A | |
| JP | 2018-27870 | A | 22 February 2018 | (Family: none) | | | |
| JP | 5-139708 | A | 08 June 1993 | EP | 000516001 | A1 | |
| | | | | entire text | | | |

Form PCT/ISA/210 (patent family annex) (January 2015)

<div align="center">

30

</div>

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021031305 A